# EUROPÄISCHE PATENTSCHRIFT

(11) **EP 2 593 949 B1**
(45) Veröffentlichungstag und Bekanntmachung des Hinweises auf die Patenterteilung: **07.09.2016**
(21) Anmeldenummer: 11743797.0
(22) Anmeldetag: 13.07.2011
(51) Int. Cl.: H01H 9/54, B60R 16/02, H01H 71/12

(54) **ÜBERSTROMSCHALTER, VERWENDUNG EINES ÜBERSTROMSCHALTERS UND ELEKTROKRAFTFAHRZEUG MIT EINEM ÜBERSTROMSCHALTER**
OVERCURRENT SWITCH, USE OF AN OVERCURRENT SWITCH AND ELECTRIC VEHICLE WITH AN OVERCURRENT SWITCH
DISJONCTEUR DE SURINTENSITÉ, UTILISATION D'UN DISJONCTEUR DE SURINTENSITÉ ET VÉHICULE ÉLECTRIQUE ÉQUIPÉ D'UN DISJONCTEUR DE SURINTENSITÉ

(30) Priorität: 11.05.2011 DE 102011101120; 16.07.2010 US 364857 P
(43) Veröffentlichungstag der Anmeldung: 22.05.2013
(73) Patentinhaber: Samsung SDI Co., Ltd., Yongin-si, Gyeonggi-do (KR)
(72) Erfinder: NIEDERL, Dietmar, 8091 Jagerberg (AT); STARZINGER, Johannes, 8010 Graz (AT); THANNER, Herbert, 8051 Graz (AT)
(74) Vertreter: Gulde & Partner
(86) Internationale Anmeldenummer: PCT/EP2011/061931
(87) Internationale Veröffentlichungsnummer: WO 2012/007494

(56) Entgegenhaltungen:
- EP-A1- 2 234 136
- WO-A1-2009/084503
- DE-A1- 3 824 116
- US-A- 5 132 865

## Beschreibung

### TECHNISCHES GEBIET

Die Erfindung betrifft einen Überstromschalter, welcher einen ersten Eingang und einen ersten Ausgang, einen ersten Strompfad, welcher den ersten Eingang mit dem ersten Ausgang verbindet, einen elektronischen Schalter im ersten Strompfad und einen ersten Sensor, welcher zur Messung des Stroms im ersten Strompfad eingerichtet ist, umfasst. Zusätzlich umfasst der Überstromschalter eine erste Steuerung, welche dazu vorbereitet ist, den elektronischen Schalter in einen nicht-leitenden oder hochohmigen Zustand zu steuern, wenn der mit dem ersten Sensor ermittelte Strom einen ersten vorgebbaren Schwellwert überschreitet. Weiterhin betrifft die Erfindung eine Verwendung eines Überstromschalters in einer elektrischen Leitung. Schließlich betrifft die Erfindung ein Elektrokraftfahrzeug, umfassend einen Antriebsakkumulator und einen diesen Akkumulator beinhaltenden Stromkreis, wobei in dem genannten Stromkreis ein Überstromschalter angeordnet ist.

### STAND DER TECHNIK

Seit geraumer Zeit werden Überstromschalter eingesetzt, welche einen Stromkreis bei übermäßigem Stromfluss automatisch unterbrechen, um Beschädigungen oder gar die Zerstörung der im Stromkreis enthaltenen Elemente zu vermeiden. Ein Beispiel sind Stromkreise in einem Elektrokraftfahrzeug, in denen die Betriebsströme bis zu 400 Ampere und mehr betragen können. Um die Verluste im Antriebsakkumulator des Elektrokraftfahrzeugs klein zu halten, werden Zellen mit einem niedrigen Innenwiderstand verwendet. Dies führt im Fehlerfall jedoch zu extrem hohen Kurzschlussströmen. Bis zu 10 kA und mehr sind möglich. Aus Betriebs- und Sicherheitsgründen sollten solche Energiespeicher daher eine Trenneinheit aufweisen, die den Akkumulator bzw. die Batterie vom restlichen Hochvolt-Bordnetz (mit bis zu 800 V Spannung) trennen kann. Diese Trenneinheit wird üblicherweise mit einer Schmelzsicherung und/oder einem Hochvolt-Relais realisiert, welches aber technisch aufwändig und daher teuer ist. Zudem hat ein solches Relais nur eine bedingte Stromtragfähigkeit. Muss unter Last geschaltet werden, so kann das Relais wegen des Lichtbogens an den Kontakten unter Umständen so stark geschädigt werden, das es nach nur einem einzigen Schaltvorgang auszutauschen ist. Aber auch die endliche Auslösezeit einer Schmelzsicherung im Bereich von 10-100 ms ist problematisch, da in dieser Zeit der volle Kurzschlussstrom fließen kann. Für viele Elemente im betroffenen Stromkreis wie zum Beispiel Relais, Zellverbindungen, Steckkontakte, etc. kann das zu nicht reversiblen Fehlern führen. Da der Kurzschlussstrom wie erwähnt extrem hohe Werte annehmen kann, müssen nach dem Stand der Technik in der Regel technisch komplizierte und damit sehr teure und große Komponenten eingesetzt werden.

Beispielsweise offenbart die DE 102 48 679 A1 zur genannten Problematik ein Fahrzeugbordnetz, welches eine mit einem Pluspol und einem Minuspol versehene Batterie aufweist und welches zur Versorgung einer Vielzahl von Verbrauchern vorgesehen ist. Zwischen dem Pluspol der Batterie und den Verbrauchern ist ein Modul vorgesehen, welches Mittel zur Batteriezustandserkennung, eine Steuereinheit zum Energiemanagement des Fahrzeugbordnetzes und mindestens einen Versorgungsausgang aufweist, über welchen die Verbraucher mit Energie versorgbar sind. In diesem Modul können Leistungsschalter bzw. Batterietrennschalter angeordnet sein, um einen Stromkreis im Bedarfsfall trennen zu können.

Bekannt ist es auch, elektronische Schaltelemente zum Schalten von Stromkreisen einzusetzen. Beispielsweise offenbart die DE 198 35 183 A1 dazu eine Schutz-Schaltung, die eine aufladbare Batterie gegen Kurzschluss und Tiefentladung. schützt. In einer Ausführungsform wird zum Ausschalten des Stromkreises ein Feldeffekt-Transistor eingesetzt.

Die Offenlegung WO 2009/084503 A1 beschreibt einen Gleichstrom-Schalter, umfassend einen Last-Anschluss und einen Versorgungs-Anschluss, eine Verbindungs-Einheit mit mechanischen Kontakten und einem seriell dazu angeordneten Transistor, wobei die Verbindungs-Einheit zwischen dem Last-Anschluss und dem Versorgungs-Anschluss angeordnet ist, und einen Schaltmechanismus mit einem Bedienhebel für eine manuelle Betätigung, wobei der Bedienhebel beweglich am Gehäuse befestigt ist und dazu eingerichtet ist die mechanischen Kontakte zu öffnen und zu schließen, wobei das Gehäuse eine Positionserkennung beherbergt die dazu eingerichtet ist die Position des Bedienhebels zu erkennen, und eine Steuereinheit die dazu eingerichtet ist den Transistor abhängig von der Position des Bedienhebels zu schalten, wobei die Steuereinheit dazu eingerichtet ist den Transistor von einem sperrenden in einen leitfähigen Zustand zu schalten wenn die Positionserkennung eine Bewegung des Bedienhebels von einer offenen Position in eine geschlossene Position erkennt.

Das Patent US 5,132,865 beschreibt eine Vorrichtung zum Unterbrechen einer Schaltung mit einem Eingang, an den eine Leistungsversorgung anschließbar ist, und einem Ausgang, an den eine Last anschließbar ist, umfassend einen Trennschalter mit Hauptkontakten die den Eingang mit dem Ausgang verbinden, und eine manuell betätigbare Steuereinrichtung mit der die Hauptkontakte geschlossen oder geöffnet werden können, einen elektronischen Schalter der zwischen dem Eingang und dem Ausgang in Serie mit dem Trennschalter verbunden ist, eine Steuerschaltung die mit dem elektronischen Schalter verbunden ist um den elektronischen Schalter zwischen einer Ein-Stellung, in der Strom vom Eingang zum Ausgang fließen kann, und einer Aus-Stellung, in der kein Strom vom Eingang zum Ausgang fließen kann, umzuschalten, eine Vorrichtung zur Spannungserfassung die dazu eingerichtet ist eine Spannung am Ausgang zu erkennen und eine Bedienung des Wählhebels zu verhindern wenn am Ausgang eine Spannung anliegt, sowie eine Vorrichtung die dazu eingerichtet ist die Steuerschaltung am Umschalten des elektronischen Schalters in die Ein-Stellung zu hindern wenn die Hauptkontakte des Trennschalters offen sind, und ein Umschalten des elektronischen Schalters in die Ein-Stellung zu ermöglichen wenn die Hauptkontakte geschlossen sind.

Die Offenlegung DE 3824116 A1 offenbart eine Schaltung bzw. Vorrichtung zur Speisung einer Last mit Schutz gegen Überströme mit Hilfe von mit dieser Last in Reihe geschalteten gesteuerten Halbleitern und elektromechanischen Schaltern, bei der durch die Messung dieser Ströme erzeugte Signale in einer bestimmten Rei-henfolge und mit einer bestimmten Verzögerung sowohl an die Steuerelektroden der Halbleiter als auch an die elektromechanischen Steuerorgane der Schalter angelegt werden, wobei der elektromechanische Schalter Strombegrenzungseigenschaften besitzt, die im Fall einer Überlastung durch eine Öffnung ausgenutzt werden, die sehr schnell auf die Erzeugung von Sperrsignalen folgt, die an sperrbare Niederspannungshalbleiter, beispielsweise IGBT-Elemente, angelegt sind, die jeweils zu einem Spannungsbegrenzer parallelgeschaltet sind, und zwar so, dass diese kurze Verzögerung die Öffnung des Stromkreises bewirkt, bevor der Strom Null wird.

Problematisch ist an den bekannten Vorrichtungen, dass ein Feldeffekt-Transistor einen Stromkreis zwar relativ schnell trennen kann, die Trennung aber nicht galvanisch erfolgt. Bei Vorrichtungen mit einem Trennrelais kann dagegen das zumindest kurzfristige Fließen extrem hoher Ströme nicht verhindert werden, was die Lebensdauer des Trennrelais drastisch einschränkt.

### OFFENBARUNG DER ERFINDUNG

Die Aufgabe der vorliegenden Erfindung ist es daher, einen verbesserten Überstromschalter sowie eine Verwendung eines solchen Überstromschalters anzugeben. Insbesondere soll ein Stromkreis galvanisch getrennt werden ohne dabei jedoch die Lebensdauer eines Trennrelais drastisch einzuschränken.

Die Aufgabe der Erfindung wird durch einen Überstromschalter der eingangs genannten Art gelöst, umfassend
einen elektromechanischen Schalter (10) in einem zweiten Strompfad, welcher einen zweiten Eingang (13) mit einen zweiten Ausgang (14) verbindet, wobei die beiden Strompfade zur Schaltung in einem gemeinsamen Stromkreis vorgesehen sind, und
- eine zweite Steuerung (11), welche dazu vorbereitet ist, den elektromechanischen Schalter (10) in einen nicht-leitenden Zustand zu steuern, wenn der mit dem ersten Sensor (5) ermittelte Strom einen zweiten vorgebbaren Schwellwert unterschreitet und/oder eine vorgebbare Zeitspanne nach der Steuerung des elektronischen Schalters (4) in einen nicht-leitenden oder hochohmigen Zustand verstrichen ist.

Weiterhin wird die Aufgabe der Erfindung durch eine Verwendung eines erfindungsgemäßen Überstromschalters in einer elektrischen Leitung gelöst.

Schließlich wird die Aufgabe der Erfindung durch ein Elektrokraftfahrzeug gelöst, welches einen Antriebsakkumulator und einen diesen Akkumulator beinhaltenden Stromkreis umfasst, wobei in dem genannten Stromkreis ein erfindungsgemäßer Überstromschalter angeordnet ist.

Die Anstiegszeit eines Stroms wird durch im Stromkreis enthaltene Induktivitäten begrenzt. Dies gilt insbesondere auch für den Kurzschlussstrom in einem Batteriesystem, da eine parasitäre Induktivität, welche durch den Aufbau der Batterie bedingt ist, den Stromanstieg begrenzt. Als Richtwert kann davon ausgegangen werden, dass der Maximalstrom nach einer Zeit von zirka 100µs bis 1ms erreicht wird.

Wird ein hinreichend schneller Sensor zur Messung des Stroms verwendet, so gelingt es, einen unzulässigen Wert des Stroms schon vor Erreichen seines Maximalwertes zu detektieren und in Folge den Stromkreis mit dem elektronischen Schalter zu unterbrechen. Der elektromechanische Schalter bleibt dagegen weiterhin geschlossen. Dieser wird erst unterhalb eines zweiten vorgebbaren Stromwertes geöffnet, sodass die Kontakte des elektromechanischen Schalters geschont werden und die Lebensdauer desselben erhöht wird. In einer besonders vorteilhaften Variante der Erfindung wird der elektromechanische Schalter erst dann geöffnet, wenn im Stromkreis kein Strom mehr fließt. Alternativ kann der elektromechanische Schalter auch nach Verstreichen einer Zeitspanne nach dem Ausschalten des elektronischen Schalters ausgeschaltet werden. Bei dieser Variante ist es von Vorteil, wenn die Ausschaltverzögerung des elektronischen Schalters beziehungsweise das Abklingverhalten des Stroms im Stromkreis bekannt ist.

Der Überstromschalter umfasst somit eine Serienschaltung eines elektronischen und eines elektromechanischen Schalters. Diese Art der Sicherung des Stromkreises ist reversibel, das heißt der Stromkreis kann nach einem Fehler sofort wieder in Betrieb gesetzt werden.

Obwohl der Stromkreis mit einem relativ langsamen elektromechanischen Schalter galvanisch getrennt wird, treten Kurzschlussströme von 10 kA und mehr nicht mehr auf, da der Stromkreis vom elektronischen Schalter innerhalb weniger Mikrosekunden unterbrochen wird. Stattdessen werden die Ströme im Fehlerfall auf ein handhabbares Maß von beispielsweise 400 - 500 A begrenzt. Somit werden die im Stromkreis enthaltenen Komponenten (Relais, Zellverbinder, Zellen, Steckkontakte, etc.) im Fehlerfall ebenfalls nur diesem relativ geringen Strom ausgesetzt. Daher können diese Komponenten auf einen geringeren Spitzenstrom dimensioniert werden und sind dadurch technisch einfacher und somit auch kostengünstiger.

Vorteilhafte Ausgestaltungen und Weiterbildungen der Erfindung ergeben sich nun aus den Unteransprüchen sowie aus der Beschreibung in Zusammenschau mit den Figuren der Zeichnung.

Günstig ist es, wenn als elektronischer Schalter ein Feldeffekt-Transistor, ein Insulated-Gate-Bipolar-Transistor oder ein Bipolar-Transistor vorgesehen ist. Dies sind leicht verfügbare und bewährte Mittel um Stromkreise ein- und auszuschalten, weswegen die Erfindung mit vergleichsweise geringem Aufwand in die Praxis umgesetzt werden kann und zudem noch wenig fehleranfällig ist.

Vorteilhaft ist es auch, wenn als erste Steuerung ein erster Komparator vorgesehen ist, an dessen Eingänge der mit dem ersten Sensor ermittelte Strom und der erste vorgebbare Schwellwert geführt sind und dessen Ausgang mit einem Steuereingang des elektronischen Schalters verbunden ist. Komparatoren sind leicht verfügbare und bewährte Mittel um unterschiedliche Spannungspegel zu detektieren, weswegen die Erfindung mit vergleichsweise geringem Aufwand in die Praxis umgesetzt werden kann und zudem noch wenig fehleranfällig ist. Darüber hinaus sind Komparatoren extrem schnell, weswegen das Auftreten allzu hoher Ströme wirksam vermieden werden kann.

In diesem Zusammenhang ist es günstig, wenn als elektronischer Schalter ein N-Kanal-Feldeffekt-Transistor, ein N-Kanal-Insulated-Gate-Bipolar-Transistor oder ein NPN-Bipolar-Transistor vorgesehen ist,
- an den negativen Eingang des ersten Komparators der mit dem ersten Sensor ermittelte Strom geführt ist und
- an den positiven Eingang des ersten Komparators der der erste vorgebbare Schwellwert geführt ist.
Überschreitet der gemessene Strom den vorgebbaren Schwellwert, so schaltet der Komparator seinen Ausgang auf einen niedrigen Pegel und schaltet damit den elektronischen Schalter ab.

In diesem Zusammenhang ist es weiterhin günstig, wenn
- als elektronischer Schalter ein P-Kanal-Feldeffekt-Transistor, ein P-Kanal-Insulated-Gate-Bipolar-Transistor oder ein PNP-Bipolar-Transistor vorgesehen ist,
- an den positiven Eingang des ersten Komparators der mit dem ersten Sensor ermittelte Strom geführt ist und
- an den negativen Eingang des ersten Komparators der der erste vorgebbare Schwellwert geführt ist.
Überschreitet der gemessene Strom den vorgebbaren Schwellwert, so schaltet der Komparator seinen Ausgang auf einen hohen Pegel und schaltet damit den elektronischen Schalter ab.

Besonders vorteilhaft ist es auch, wenn
- als elektromechanischer Schalter ein Relais vorgesehen ist und
- als zweite Steuerung ein zweiter Komparator vorgesehen ist, an dessen Eingänge der mit dem ersten Sensor ermittelte Strom und der zweite vorgebbare Schwellwert geführt sind und dessen Ausgang mit einer Steuerspule des Relais verbunden ist.
Wie bereits erwähnt sind Komparatoren leicht verfügbare und bewährte Mittel um unterschiedliche Spannungspegel zu detektieren, weswegen die Erfindung mit vergleichsweise geringem Aufwand in die Praxis umgesetzt werden kann und zudem noch wenig fehleranfällig ist. Darüber hinaus sind Komparatoren extrem schnell, weswegen das Auftreten allzu hoher Ströme wirksam vermieden werden kann.

Vorteilhaft ist es auch, wenn anstelle einer ersten Steuerung und einer zweiten Steuerung eine gemeinsame Steuerung vorgesehen ist und die erste Steuerung darin als erste Steuerfunktion und die zweite Steuerung darin als zweite Steuerfunktion ausgebildet sind. Auf diese Weise kann die Anzahl der an der Steuerung beteiligten Bauteile reduziert werden, weswegen der Schaltungsaufbau weniger komplex und in aller Regel auch billiger wird.

In diesem Zusammenhang ist es vorteilhaft, wenn als gemeinsame Steuerung ein Mikrocontroller vorgesehen ist, an dessen Eingang der mit dem ersten Sensor ermittelte Strom geführt ist und dessen Ausgang mit einem Steuereingang des elektronischen Schalters beziehungsweise mit einem Steuereingang des elektromechanischen Schalters verbunden ist. Ein Mikrocontroller erlaubt eine besonders flexible Umsetzung der Erfindung, welche vergleichsweise einfach an unterschiedliche Rahmenbedingungen angepasst werden kann. Häufig weisen Mikrocontroller Mittel zum Messen eines Analogsignals auf (z.B. Analog-DigitalWandler), sodass ein Signal eines Sensors direkt verarbeitet werden kann.

Günstig ist es, wenn der erste Sensor anstatt im ersten Strompfad im zweiten Strompfad angeordnet ist. Auf diese Weise kann der erfindungsgemäße Überstromschalter unter Umständen einfacher realisiert werden.

Günstig ist es weiterhin, wenn ein zweiter Sensor im zweiten Strompfad angeordnet ist, welcher zur Messung des Stroms im zweiten Strompfad eingerichtet ist, und die zweite Steuerung anstatt auf dem mit dem ersten Sensor ermittelten Strom auf einem mit dem zweiten Sensor ermittelten Strom basiert. Dies ist eine weitere Möglichkeit, um den erfindungsgemäßen Überstromschalter unter Umständen einfacher zu realisieren.

Vorteilhaft ist es, wenn der erste Sensor/zweite Sensor zur Messung des Stroms als Hallsensor ausgebildet ist. Hallsensoren reagieren extrem schnell auf Änderungen des Stroms, sodass unzulässige Ströme schon innerhalb weniger Mikrosekunden sicher detektiert werden können.

Vorteilhaft ist zudem eine Verwendung eines erfindungsgemäßen Überstromschalters mit nur einem ersten Strompfad, bei welcher der erste Strompfad in einer elektrischen Leitung mit von einem Massepotential abweichenden Spannungspotential liegt. Bei dieser Variante wird der Stromkreis also bei einem positiven oder negativen Spannungspotential unterbrochen. Dies hat den Vorteil, dass Teile des Stromkreises, welche beispielsweise blank liegen und berührt werden können, nach dem Trennen des Stromkreises keine gefährliche Spannung mehr führen.

An dieser Stelle wird angemerkt, dass sich die Erfindung insbesondere auch für Hochvolt-Systeme (HV-Systeme) eignet. Bei diesen Systemen ist die Hochvolt-Spannung in aller Regel galvanisch getrennt von der Fahrzeugmasse. Ist dies der Fall, so ist der Begriff "Massepotential" im nachfolgenden Text gedanklich durch den Begriff "HV-Minus" zu ersetzen, welcher gemeinsam mit dem Begriff "HV-Plus" die beiden Spannungspotentiale eines HV-Systems bezeichnet.

Besonders vorteilhaft ist auch eine Verwendung eines erfindungsgemäßen Überstromschalters mit einem ersten und einem zweiten Strompfad, bei welcher der erste Strompfad in einer elektrischen Leitung mit einem Massepotential und der zweite Strompfad in einer elektrischen Leitung mit einem vom Massepotential abweichenden Spannungspotential liegen. Bei dieser Variante wird der Stromkreis durch den elektronischen Schalter an Masse, bei einem positiven oder negativen Spannungspotential dagegen durch den elektromechanischen Schalter unterbrochen. Dies hat den Vorteil, dass der Stromkreis völlig getrennt wird. Teile des Stromkreises, welche beispielsweise blank liegen und berührt werden können, führen nach dem Trennen des Stromkreises daher keine gefährliche Spannung mehr. Vorteilhaft wird der Stromkreis bei dem positiven oder negativen Spannungspotential galvanisch getrennt, was besonders hohe Sicherheit bietet. Der elektronische Schalter an Masse trennt den Stromkreis zwar auch, jedoch nicht galvanisch. Ein Fehler in dem elektronischen Schalter könnte daher dazu führen, dass diese Leitung nicht mehr getrennt wird. Dies ist aber mit relativ geringem Risiko verbunden, da ja von der Masseleitung in der Regel ohnehin keine gefährliche Spannung ausgeht. Diese Variante der Erfindung trennt also im Normalfall den Stromkreis an beiden Spannungspotentialen, bei defektem elektronischen Schalter aber zumindest am positiven oder negativen Spannungspotential.

In diesem Zusammenhang ist es von Vorteil, wenn der elektromechanische Schalter nach einer vorgebbaren Verzögerungszeit nach dem Ausschaltsignal für den elektronischen Schalter ausgeschaltet wird. Ist der elektronische Schalter defekt, so kann dieser den Stromkreis nicht mehr trennen und der Strom kann nicht unter den zweiten Schwellwert sinken, welcher in einer Variante der Erfindung für das Ausschalten des elektromechanischen Schalters vorgesehen ist. Nun wird der elektromechanische Schalter aber nach einer bestimmten Verzögerungszeit getrennt. Zwar kann dies mit einer Zerstörung des elektromechanischen Schalters einhergehen, da dieser unter Umständen den vollen Kurzschlussstrom trennen muss, jedoch kann so die Beschädigung oder Zerstörung anderer Komponenten beziehungsweise eine Gefährdung von Menschen weitgehend verhindert werden. Schließlich kann durch den zusätzlichen Einbau einer Schmelzsicherung auch beim Versagen des elektromechanischen Schalters eine zuverlässige Trennung gewährleistet werden. Diese Variante der Erfindung ist daher besonders sicher.

Günstig ist es, wenn der Antriebsakkumulator vom Elektrokraftfahrzeug lösbar ist und der Überstromschalter akkumulatorseitig angeordnet ist. Auf diese Weise können die Anschlussklemmen des Akkumulators spannungslos geschaltet werden, um so eine Gefährdung durch Berühren blank liegender Kontakte auszuschließen.

Günstig ist es auch, wenn der Antriebsakkumulator vom Elektrokraftfahrzeug lösbar ist und der Überstromschalter fahrzeugseitig angeordnet ist. Auf diese Weise können die Anschlussklemmen des Fahrzeugnetzes spannungslos geschaltet werden, um so eine Gefährdung durch Berühren blank liegender Kontakte auszuschließen.

An dieser Stelle wird angemerkt, dass sich die zum erfindungsgemäßen Überstromschalter genannten Alternativen und die daraus resultierenden Vorteile gleichermaßen auf die erfindungsgemäße Verwendung und das erfindungsgemäße Fahrzeug beziehen und umgekehrt.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: eine Ausführungsform eines Überstromschalters;
- Figur 2: eine Ausführungsform eines erfindungsgemäßen Überstromschalters mit einem elektromechanischen Schalter, welcher in einem zweiten Strompfad angeordnet ist und
- Figur 3: eine weitere Ausführungsform eines erfindungsgemäßen Überstromschalters mit einem Mikrocontroller als gemeinsame Steuerung für den elektronischen und den elektromechanischen Schalter.

### DETAILIERTE BESCHREIBUNG DER ERFINDUNG

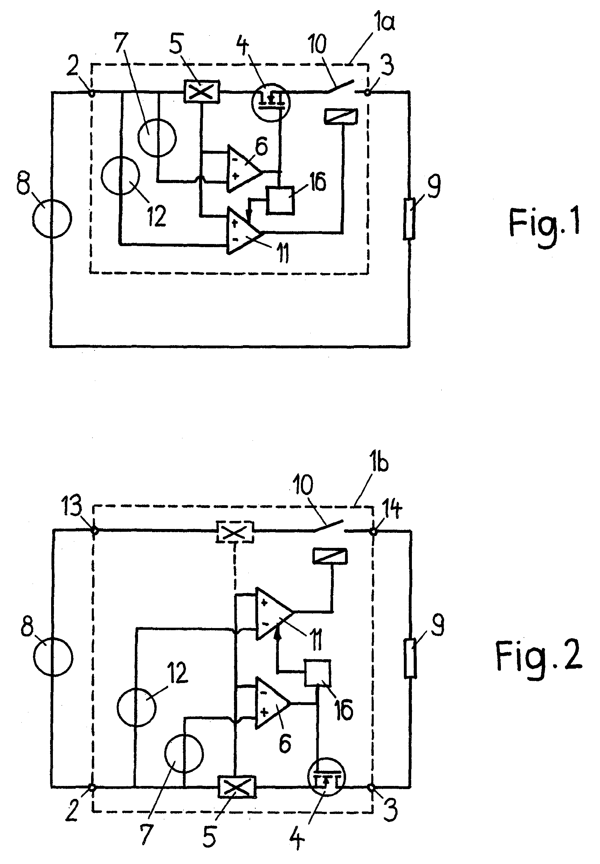

Fig. 1 zeigt eine erste Ausführungsform eines Überstromschalters 1a, welcher einen ersten Eingang 2 und einen ersten Ausgang 3 sowie einen ersten Strompfad, welcher den ersten Eingang 2 mit dem ersten Ausgang 3 verbindet, umfasst. Im ersten Strompfad sind ein elektronischer Schalter 4, ein elektromechanischer Schalter 10 und ein erster Hallsensor 5, welcher zur Messung des Stroms im ersten Strompfad eingerichtet ist, angeordnet. Zusätzlich umfasst der Überstromschalter 1a eine erste Steuerung 6, welche dazu vorbereitet ist, den elektronischen Schalter 4 in einen nicht-leitenden oder hochohmigen Zustand zu steuern, wenn der mit dem ersten Hallsensor 5 ermittelte Strom einen ersten vorgebbaren Schwellwert überschreitet. Schließlich umfasst der Überstromschalter 1a eine zweite Steuerung 11, welche dazu vorbereitet ist, den elektromechanischen Schalter 10 in einen nicht-leitenden Zustand zu steuern, wenn der mit dem ersten Hallsensor 5 ermittelte Strom einen zweiten vorgebbaren Schwellwert unterschreitet. Zusätzlich umfasst der Überstromschalter 1a eine Logik 16, welche bewirkt, dass die zweite Steuerung (der zweite Komparator) 11 erst dann aktiv wird, wenn die erste Steuerung 6 (der erste Komparator) ausgelöst hat.

Im vorliegenden Beispiel ist der elektronische Schalter 4 als Feldeffekt-Transistor, konkret als N-Kanal-MOSFET, ausgebildet. Gleichwertig können aber auch andere Feldeffekt-Transistoren, Insulated-Gate-Bipolar-Transistoren oder Bipolar-Transistoren eingesetzt werden.

Als erste Steuerung ist ein erster Komparator 6 vorgesehen ist, an dessen Eingänge der mit dem ersten Hallsensor 5 ermittelte Strom und der erste vorgebbare Schwellwert geführt sind und dessen Ausgang mit einem Steuereingang des elektronischen Schalters 4 verbunden ist. Konkret sind an den negativen Eingang des ersten Komparators 6 der mit dem ersten Hallsensor 5 ermittelte Strom und an den positiven Eingang des ersten Komparators 6 der erste vorgebbare Schwellwert geführt. Der erste Schwellwert wird in diesem Beispiel durch eine erste Referenz-Spannungsquelle 7 erzeugt.

Im vorliegenden Beispiel sind als elektromechanischer Schalter ein Relais 10 und als zweite Steuerung ein zweiter Komparator 11 vorgesehen. An die Eingänge des zweiten Komparators 11 sind der mit dem ersten Hallsensor 5 ermittelte Strom und der zweite vorgebbare Schwellwert geführt. Dessen Ausgang ist mit einer Steuerspule des Relais 10 verbunden. Der zweite Schwellwert wird in diesem Beispiel durch eine zweite Referenz-Spannungsquelle 12 erzeugt.

Überschreitet der gemessene Strom (welcher in diesem Beispiel als Spannungssignal vorliegt) nun den vorgebbaren Schwellwert, so schaltet der erste Komparator 6 seinen Ausgang auf einen niedrigen Pegel und schaltet damit den elektronischen Schalter 4 ab. Unterschreitet der gemessene Strom daraufhin den zweiten Schwellwert, so schaltet der zweite Komparator 11 auch den elektromechanischen Schalter 10 aus. Alternativ kann der elektromechanische Schalter 10 auch nach Verstreichen einer Zeitspanne nach dem Ausschalten des elektronischen Schalters 4 ausgeschaltet werden. In diesem Fall kann der zweiten Komparator 11 entfallen. Stattdessen kann der Ausgang des ersten Komparators 6 über ein Verzögerungsglied (nicht dargestellt) mit der Steuerspule des Relais 10 verbunden werden. Wird das zeitlich verzögerte Schalten des elektromagnetischen Schalters 10 zusätzlich vorgesehen, so bleibt der zweite Komparator 11 in der Schaltung. Dessen Ausgang wird aber wie der über ein Verzögerungsglied (nicht dargestellt) geführte Ausgang des ersten Komparators 6 an den Eingang eines ODER-Gatters (nicht dargestellt) gelegt. Der Ausgang des ODER-Gatters steuert dann den elektromechanischen Schalter 10 an. Bei dieser Variante wird der elektromechanische Schalter 10 also ausgeschaltet, wenn der Strom unter den zweiten Schwellwert sinkt oder eine Zeitspanne nach dem Ausschalten des elektronischen Schalters 4 verstrichen ist.

Durch die Verwendung eines schnellen Komparators 6 und eines schellen ersten Hallsensors 5 gelingt es, einen unzulässigen Wert des Stroms nun schon vor Erreichen seines Maximalwertes zu detektieren und in Folge den Stromkreis mit dem schnellen elektronischen Schalter 4 zu unterbrechen.

Die schnelle Unterbrechung des Stromkreises erfolgt also durch den elektronischen Schalter 4 besorgt, wohingegen der elektromechanische Schalter 10 weiterhin geschlossen bleibt. Dieser wird erst unterhalb eines vorgebbaren Stromwertes geöffnet, sodass die Kontakte des elektromechanischen Schalters 10 geschont werden und die Lebensdauer desselben erhöht wird. Der elektromechanische Schalter 10 sorgt bei dieser Variante der Erfindung für eine galvanische Trennung des Stromkreises.

Bei Verwendung eines P-Kanal-Feldeffekt-Transistors, eines P-Kanal-Insulated-Gate-Bipolar-Transistors oder eines PNP-Bipolar-Transistors wird analog der mit dem Hallsensor 5 ermittelte Strom an den positiven Eingang und der erste vorgebbare Schwellwert an den negativen Eingang des ersten Komparators 6 geführt.

Zusätzlich ist Fig. 1 ein Stromkreis dargestellt, in den der Überstromschalter 1a eingefügt ist. Der Stromkreis umfasst im einfachsten Fall eine Spannungsquelle 8, eine Last 9, sowie wie erwähnt den Überstromschalter 1a. Beispielsweise können die Spannungsquelle 8 durch einen Antriebakkumulator und die Last 9 durch einen Antriebsmotor oder andere elektrische Verbraucher eines Elektrokraftfahrzeuges gebildet sein. Im vorliegenden Beispiel liegt der erste Strompfad des Überstromschalters 1a in einer elektrischen Leitung mit von einem Massepotential abweichenden Spannungspotential, konkret am positiven Spannungspotential der Spannungsquelle 8. Bei dieser Variante wird der Stromkreis also bei einem positiven Spannungspotential unterbrochen. Dies hat den Vorteil, dass Teile des Stromkreises, welche beispielsweise blank liegen und berührt werden können, nach dem Trennen des Stromkreises keine gefährliche Spannung mehr führen.

Fig. 2 zeigt nun eine abgewandelte Ausführungsform eines Überstromschalters 1b, welcher dem in Fig. 1 dargestellten Überstromschalter 1a sehr ähnlich ist. Zusätzlich zu diesem umfasst der Überstromschalter 1b einen zweiten Eingang 13 und einen zweiten Ausgang 14 sowie einen zweiten Strompfad, welcher den zweiten Eingang 13 mit dem zweiten Ausgang 14 verbindet. Der elektromechanische Schalter 10 ist in diesem Fall im zweiten Strompfad angeordnet.

In einer Alternative der Erfindung wird der erste Hallsensor 5 anstatt im ersten Strompfad im zweiten Strompfad angeordnet ist. Dies ist in der Fig. 2 durch einen strichliert dargestellten Hallsensor angedeutet. Weiterhin wäre möglich, dass zusätzlich zum ersten Hallsensor 5 ein zweiter Hallsensor im zweiten Strompfad angeordnet ist, welcher zur Messung des Stroms im zweiten Strompfad eingerichtet ist, und die zweite Steuerung anstatt auf dem mit dem ersten Hallsensor 5 ermittelten Strom auf einem mit dem zweiten Hallsensor ermittelten Strom basiert. In diesem Fall würde in Fig. 2 die Verbindungsleitung zwischen den beiden Komparatoren 6 und 11 entfallen. Denkbar wäre natürlich auch, dass der mit dem ersten Hallsensor 5 ermittelte Strom für die Steuerung des elektromechanischen Schalters 10 und der mit dem zweiten Hallsensor 5 ermittelte Strom für die Steuerung des elektronischen Schalters 4 herangezogen wird.

Wie in der Fig. 2 gut erkennbar ist liegen der erste Strompfad in diesem Beispiel in einer elektrischen Leitung mit einem Massepotential und der zweite Strompfad in einer elektrischen Leitung mit einem vom Massepotential abweichenden Spannungspotential, hier mit positivem Spannungspotential. Somit wird der Stromkreis durch den elektronischen Schalter 4 an Masse, am positiven Spannungspotential dagegen durch das Relais 10 unterbrochen. Dies hat den Vorteil, dass der Stromkreis im Regelfall völlig getrennt wird. Teile des Stromkreises, welche beispielsweise blank liegen und berührt werden können, führen nach dem Trennen des Stromkreises daher keine gefährliche Spannung mehr. Liegt ein Defekt des elektronischen Schalters 4 vor, so wird der Stromkreis zumindest aber noch am positiven Spannungspotential galvanisch getrennt.

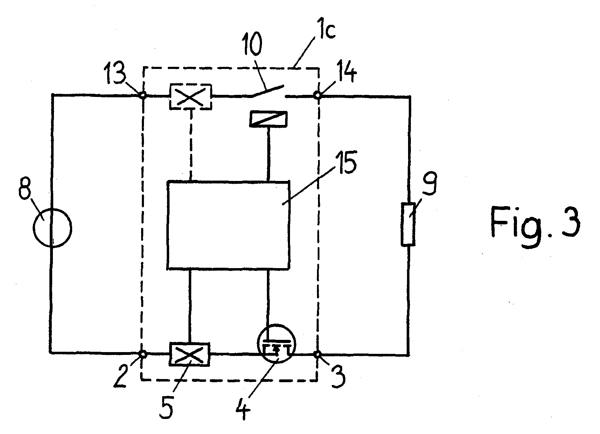

Fig. 3 zeigt eine weitere Variante eines Überstromschalters 1c. Dabei ist anstelle einer ersten Steuerung 6 und einer zweiten Steuerung 11 eine gemeinsame Steuerung vorgesehen, wobei die erste Steuerung darin als erste Steuerfunktion und die zweite Steuerung darin als zweite Steuerfunktion ausgebildet ist. Konkret ist als Steuerung ein Mikrocontroller 15 vorgesehen, an dessen Eingang der mit dem ersten Hallsensor 5 ermittelte Strom geführt ist und dessen Ausgang mit einem Steuereingang des elektronischen Schalters 4 beziehungsweise mit einem Steuereingang des elektromechanischen Schalters 10 verbunden ist. Die erste und die zweite Steuerfunktion sind nun als Software realisiert, welche zur Laufzeit vom Mikrocontroller 15 ausgeführt wird. Alternative Ausführungsformen können so besonders leicht in die Praxis umgesetzt werden. Beispielsweise ist es durch einfache Änderung der Programmierung des Mikrocontrollers 15 möglich, die zweite Steuerfunktion so zu realisieren, dass der elektromechanischen Schalter 10 in einen nicht-leitenden Zustand zu steuern, wenn der mit dem ersten Sensor 5 ermittelte Strom einen zweiten vorgebbaren Schwellwert unterschreitet und/oder eine vorgebbare Zeitspanne nach der Steuerung des elektronischen Schalters 4 in einen nicht-leitenden oder hochohmigen Zustand verstrichen ist.

Abschließend wird angemerkt, dass der Überstromschalter 1a..1c nicht notwendigerweise als gesondertes Bauteil mit gesondertem Gehäuse vorliegt. Selbstverständlich können die einzelnen Bauteile an beliebiger Stelle in einen Schaltkreis eingefügt werden solange sich die erfindungsgemäße Funktionsweise ergibt. Die Elemente eines Überstromschalters 1a..1c müssen daher nicht in einem gemeinsamen Gehäuse zusammengefasst sein. In diesem Fall kann die in den Figuren dargestellte Begrenzung des Überstromschalters 1a..1c als funktionale Gruppierung aufgefasst werden. Analog müssen die Eingänge 2, 13 und Ausgänge 3, 14 nicht zwingend als gesonderte Bauteile im Sinne von Anschlussklemmen und dergleichen vorliegen. Wenn die Elemente eines Überstromschalters 1a..1c nicht in einem gemeinsamen Gehäuse zusammengefasst sind, stellen die Eingänge 2, 13 und Ausgänge 3, 14 lediglich die Begrenzung der genannten funktionalen Gruppierung dar. Physisch kann daher an den Eingängen 2, 13 und Ausgängen 3, 14 auch eine durchgehende elektrische Leitung vorhanden sein. Darüber hinaus wird angemerkt dass der elektrische Strom sowohl vom Eingang 2, 13 zum Ausgang 3, 14 als auch in umgekehrter Richtung fließen kann. Insbesondere kann der erfindungsgemäße Überstromschalter 1a..1c auch für Wechselstrom eingesetzt werden.

Weiterhin wird angemerkt, dass obwohl in den vorgestellten Beispielen stets Hallsensoren für die Strommessung verwendet wurden und obwohl diese Hallsensoren bevorzugt eingesetzt werden für die Erfindung auch andere Sensoren als Hallsensoren für die Strommessung eingesetzt werden können. Beispielsweise kann der Spannungsabfall an einem Strommesswiderstand (Shunt) gemessen werden. Denkbar ist aber beispielsweise auch die Anwendung von Sensoren, die den Faraday-Effekt oder den Magnetoresistiven Effekt ausnützen Wird der erfindungsgemäße Überstromschalter 1a..1c beispielsweise in einem Elektrokraftfahrzeug eingesetzt, dann kann dieser - wenn der Antriebsakkumulator vom Elektrokraftfahrzeug lösbar ist - sowohl akkumulatorseitig also auch fahrzeugseitig angeordnet sein.

## Patentansprüche

1. Überstromschalter (1a..1c), umfassend
- einen ersten Eingang (2) und einen ersten Ausgang (3),
- einen ersten Strompfad, welcher den ersten Eingang (2) mit dem ersten Ausgang (3) verbindet,
- einen elektronischen Schalter (4) im ersten Strompfad,
- einen ersten Sensor (5), welcher zur Messung des Stroms im ersten Strompfad eingerichtet ist und
- eine erste Steuerung (6), welche dazu vorbereitet ist, den elektronischen Schalter (4) in einen nicht-leitenden oder hochohmigen Zustand zu steuern, wenn der mit dem ersten Sensor (5) ermittelte Strom einen ersten vorgebbaren Schwellwert überschreitet,
**gekennzeichnet durch**
- einen elektromechanischen Schalter (10) in einem zweiten Strompfad, welcher einen zweiten Eingang (13) mit einen zweiten Ausgang (14) verbindet, wobei die beiden Strompfade zur Schaltung in einem gemeinsamen Stromkreis vorgesehen sind, und
- eine zweite Steuerung (11), welche dazu vorbereitet ist, den elektromechanischen Schalter (10) in einen nicht-leitenden Zustand zu steuern, wenn der mit dem ersten Sensor (5) ermittelte Strom einen zweiten vorgebbaren Schwellwert unterschreitet und/oder eine vorgebbare Zeitspanne nach der Steuerung des elektronischen Schalters (4) in einen nicht-leitenden oder hochohmigen Zustand verstrichen ist.

2. Überstromschalter (1a..1c) nach Anspruch 1, **dadurch gekennzeichnet, dass** als elektronischer Schalter (4) ein Feldeffekt-Transistor, ein Insulated-Gate-Bipolar-Transistor oder ein Bipolar-Transistor vorgesehen ist.

3. Überstromschalter (1a..1c) nach einem der Ansprüche 1 bis 2, **dadurch gekennzeichnet, dass** als erste Steuerung ein erster Komparator (6) vorgesehen ist, an dessen Eingänge der mit dem ersten Sensor (5) ermittelte Strom und der erste vorgebbare Schwellwert geführt sind und dessen Ausgang mit einem Steuereingang des elektronischen Schalters (4) verbunden ist.

4. Überstromschalter (1a..1c) nach einem der Ansprüche 1 bis 3, **dadurch gekennzeichnet, dass**
- als elektromechanischer Schalter ein Relais (10) vorgesehen ist und
- als zweite Steuerung ein zweiter Komparator (11) vorgesehen ist, an dessen Eingänge der mit dem ersten Sensor (5) ermittelte Strom und der zweite vorgebbare Schwellwert geführt sind und dessen Ausgang mit einer Steuerspule des Relais (10) verbunden ist.

5. Überstromschalter (1a..1c) nach einem der Ansprüche 1 bis 4, **dadurch gekennzeichnet, dass** anstelle der ersten Steuerung (6) und der zweiten Steuerung (11) eine gemeinsame Steuerung vorgesehen ist und die erste Steuerung darin als erste Steuerfunktion und die zweite Steuerung darin als zweite Steuerfunktion ausgebildet sind.

6. Überstromschalter nach Anspruch 5, **dadurch gekennzeichnet, dass** als gemeinsame Steuerung ein Mikrocontroller (15) vorgesehen ist, an dessen Eingang der mit dem ersten Sensor (5) ermittelte Strom geführt ist und dessen Ausgang mit einem Steuereingang des elektronischen Schalters (4) beziehungsweise mit einem Steuereingang des elektromechanischen Schalters (10) verbunden ist.

7. Überstromschalter (1a..1c) nach einem der Ansprüche 2 bis 6, **dadurch gekennzeichnet, dass** der ersten Sensor (5) anstatt im ersten Strompfad im zweiten Strompfad angeordnet ist

8. Überstromschalter (1a..1c) nach einem der Ansprüche 2 bis 6, **dadurch gekennzeichnet, dass** ein zweiter Sensor im zweiten Strompfad angeordnet ist, welcher zur Messung des Stroms im zweiten Strompfad eingerichtet ist, und die zweite Steuerung (11) anstatt auf dem mit dem ersten Sensor (5) ermittelten Strom auf einem mit dem zweiten Sensor ermittelten Strom basiert.

9. Überstromschalter (1a..1c) nach einem der Ansprüche 1 bis 8, **dadurch gekennzeichnet, dass** der erste Sensor (5)/zweite Sensor zur Messung des Stroms als Hallsensor ausgebildet ist.

10. Verwendung eines Überstromschalters (1a..1c) nach einem der Ansprüche 1 bis 9 mit einem ersten und einem zweiten Strompfad, **dadurch gekennzeichnet, dass** der erste Strompfad in einer elektrischen Leitung mit einem Massepotential und der zweite Strompfad in einer elektrischen Leitung mit einem vom Massepotential abweichenden Spannungspotential liegen.

11. Verwendung nach Anspruch 10, **dadurch gekennzeichnet, dass** der erste Strompfad beziehungsweise der zweite Strompfad in einem den Antriebakkumulator eines Elektrokraftfahrzeuges beinhaltenden Stromkreis angeordnet ist.

12. Elektrokraftfahrzeug, umfassend einen Antriebsakkumulator und einen diesen Akkumulator beinhaltenden Stromkreis, **dadurch gekennzeichnet, dass** in dem genannten Stromkreis ein Überstromschalter (1a..1c) nach einem der Ansprüche 1 bis 9 angeordnet ist.

13. Elektrokraftfahrzeug nach Anspruch 12 , **dadurch gekennzeichnet, dass** der Antriebsakkumulator vom Elektrokraftfahrzeug lösbar ist und der Überstromschalter (1a..1c) Akkumulator-seitig angeordnet ist.

14. Elektrokraftfahrzeug nach Anspruch 12 , **dadurch gekennzeichnet, dass** der Antriebsakkumulator vom Elektrokraftfahrzeug lösbar ist und der Überstromschalter (1a..1c) Fahrzeug-seitig angeordnet ist.

## Claims

1. Overcurrent switch (1a..1c), comprising
- a first input (2) and a first output (3),
- a first current path which connects the first input (2) to the first output (3),
- an electronic switch (4) in the first current path,
- a first sensor (5) which is adapted to measure the current in the first current path and
- a first controller (6) which is set up to change the electronic switch (4) into a non-conducting or high-resistance state when the current determined by the first sensor (5) exceeds a first predeterminable threshold value,
**characterised by**
- an electromechanical switch (10) in a second current path which connects a second input (13) to a second output (14), the two current paths being provided for switching in a common circuit, and
- a second controller (11) which is set up to change the electromechanical switch (10) into a non-conducting state when the current determined by the first sensor (5) falls below a second predeterminable threshold value and/or a predeterminable time period after the changing of the electronic switch (4) into a non-conducting or high-resistance state has elapsed.

2. Overcurrent switch (1a..1c) according to Claim 1, **characterised in that** a field-effect transistor, an insulated-gate bipolar transistor or a bipolar transistor is provided as the electronic switch (4).

3. Overcurrent switch (1a..1c) according to one of Claims 1 to 2, **characterised in that**, as the first controller, there is provided a first comparator (6), to the inputs of which the current determined by the first sensor (5) and the first predeterminable threshold value are conducted and the output of which is connected to a control input of the electronic switch (4).

4. Overcurrent switch (1a..1c) according to one of Claims 1 to 3, **characterised in that**
- as the electromechanical switch, there is provided a relay (10) and
- as the second controller, there is provided a second comparator (11), to the inputs of which the current determined by the first sensor (5) and the second predeterminable threshold value are conducted and the output of which is connected to a control coil of the relay (10).

5. Overcurrent switch (1a..1c) according to one of Claims 1 to 4, **characterised in that**, instead of the first controller (6) and the second controller (11), there is provided a common controller and the first controller therein is configured as first control function and the second controller therein is configured as second control function.

6. Overcurrent switch according to Claim 5, **characterised in that**, as the common controller, there is provided a microcontroller (15), to the input of which the current determined by the first sensor (5) is conducted and the output of which is connected to a control input of the electronic switch (4) or to a control input of the electromechanical switch (10).

7. Overcurrent switch (1a..1c) according to one of Claims 2 to 6, **characterised in that** the first sensor (5) is arranged in the second current path instead of in the first current path.

8. Overcurrent switch (1a..1c) according to one of Claims 2 to 6, **characterised in that** a second sensor is arranged in the second current path, which is adapted to measure the current in the second current path, and the second controller (11) is based on a current determined by the second sensor instead of on the current determined by the first sensor (5).

9. Overcurrent switch (1a..1c) according to one of Claims 1 to 8, **characterised in that** the first sensor (5)/second sensor for measuring the current is configured as a Hall sensor.

10. Use of an overcurrent switch (1a..1c) according to one of Claims 1 to 9 having a first and a second current path, **characterised in that** the first current path is in an electric line with an earth potential and the second current path is in an electric line with a voltage potential different from the earth potential.

11. Use according to Claim 10, **characterised in that** the first current path or the second current path is arranged in a circuit including the drive accumulator of an electric vehicle.

12. Electric vehicle, comprising a drive accumulator and a circuit including this accumulator, **characterised in that** an overcurrent switch (1a..1c) according to one of Claims 1 to 9 is arranged in the said circuit.

13. Electric vehicle according to Claim 12, **characterised in that** the drive accumulator is releasable from the electric vehicle and the overcurrent switch (1a..1c) is arranged on the accumulator side.

14. Electric vehicle according to Claim 12, **characterised in that** the drive accumulator is releasable from the electric vehicle and the overcurrent switch (1a..1c) is arranged on the vehicle side.

## Revendications

1. Disjoncteur (1a..1c) comprenant :
- une première entrée (2) et une première sortie (3),
- un premier trajet de courant qui relie la première entrée (2) avec la première sortie (3),
- un interrupteur électronique (4) dans le premier trajet de courant,
- un premier capteur (5), qui est conçu pour la mesure du courant dans le premier trajet de courant, et
- un premier dispositif de commande (6), qui est prêt à commander l'interrupteur électronique (4) dans un état non conducteur ou à résistance élevée lorsque le courant déterminé par le premier capteur (5) dépasse une première valeur seuil prédéterminée,
**caractérisé par** :
- un interrupteur électromécanique (10) dans un deuxième trajet de courant, qui relie une deuxième entrée (13) avec une deuxième sortie (14), les deux trajets de courant étant prévus pour le branchement dans un circuit commun, et
- un deuxième dispositif de commande (11), qui est prêt à commander l'interrupteur électromécanique (10) dans un état non conducteur lorsque le courant déterminé par le premier capteur (5) passe en dessous d'une deuxième valeur seuil prédéterminée et/ou lorsqu'un laps de temps prédéterminé est écoulé après la commande de l'interrupteur électronique (4) dans un état non conducteur ou à résistance élevée.

2. Disjoncteur (1a..1c) selon la revendication 1, **caractérisé en ce que** l'interrupteur électronique (4) peut être un transistor à effet de champ, un transistor bipolaire à grille isolée ou un transistor bipolaire.

3. Disjoncteur (1a..1c) selon l'une des revendications 1 et 2, **caractérisé en ce que** un premier comparateur (6) est prévu en tant que premier dispositif de commande, à une des entrées duquel le courant déterminé par le premier capteur (5) et la première valeur seuil prédéterminée sont introduits et dont la sortie est reliée à une entrée de commande de l'interrupteur électronique (4).

4. Disjoncteur (1a..1c) selon l'une des revendications 1 à 3, **caractérisé en ce que** :
- un relais (10) est prévu en tant qu'interrupteur électromécanique, et
- un deuxième comparateur (11) est prévu en tant que deuxième dispositif de commande, aux entrées duquel le courant déterminé par le premier capteur (5) et la deuxième valeur seuil prédéterminée sont introduits et dont la sortie est reliée à une bobine de commande du relais (10).

5. Disjoncteur (1a..1c) selon l'une des revendications 1 à 4, **caractérisé en ce qu'**un dispositif de commande commun est prévu au lieu du premier dispositif de commande (6) et du deuxième dispositif de commande (11), et le premier dispositif de commande y est conçu comme une première fonction de commande et le deuxième dispositif de commande y est conçu comme une deuxième fonction de commande.

6. Disjoncteur selon la revendication 5, **caractérisé en ce que** le dispositif de commande commun est un micro-contrôleur (15) à l'entrée duquel le courant déterminé par le premier capteur (5) est introduit et dont la sortie est reliée à une entrée de commande de l'interrupteur électronique (4) ou à une entrée de commande de l'interrupteur électromécanique (10).

7. Disjoncteur (1a..1c) selon l'une des revendications 2 à 6, **caractérisé en ce que** le premier capteur (5) est disposé dans le deuxième trajet de courant au lieu du premier trajet de courant.

8. Disjoncteur (1a..1c) selon l'une des revendications 2 à 6, **caractérisé en ce qu'**un deuxième capteur est disposé dans le deuxième trajet de courant, qui est conçu pour la mesure du courant dans le deuxième trajet de courant, et le deuxième dispositif de commande (11) est basé sur un courant déterminé par le deuxième capteur au lieu du courant déterminé par le premier capteur (5).

9. Disjoncteur (1a..1c) selon l'une des revendications 1 à 8, **caractérisé en ce que** le premier capteur (5)/ deuxième capteur est conçu pour la mesure du courant en tant que capteur à effet Hall.

10. Utilisation d'un disjoncteur (1a..1c) selon l'une des revendications 1 à 9, avec un premier et un deuxième trajet de courant, **caractérisée en ce que** le premier trajet de courant se trouve dans une ligne électrique avec un potentiel de masse et le deuxième trajet de courant se trouve dans une ligne électrique avec un potentiel de tension différent du potentiel de masse.

11. Utilisation selon la revendication 10, **caractérisée en ce que** le premier trajet de courant ou le deuxième trajet de courant est disposé dans le circuit contenant l'accumulateur d'entraînement d'un véhicule électrique.

12. Véhicule électrique comprenant un accumulateur d'entraînement et un circuit contenant cet accumulateur, **caractérisé en ce que**, dans le circuit mentionné, se trouve un disjoncteur (1a..1c) selon l'une des revendications 1 à 9.

13. Véhicule électrique selon la revendication 12, **caractérisé en ce que** l'accumulateur d'entraînement peut être détaché du véhicule électrique et le disjoncteur (1a..1c) est disposé du côté de l'accumulateur.

14. Véhicule électrique selon la revendication 12, **caractérisé en ce que** l'accumulateur d'entraînement peut être détaché du véhicule électrique et le disjoncteur (1a..1c) est disposé du côté du véhicule.
